**Europäisches Patentamt**

**European Patent Office**

**Office européen des brevets**

(19)

(11) Veröffentlichungsnummer: **0 263 775 B1**

(12) **EUROPÄISCHE PATENTSCHRIFT**

(45) Veröffentlichungstag der Patentschrift: 07.08.91

(51) Int. Cl.⁵: **B60C 23/04**

(21) Anmeldenummer: **87710016.4**

(22) Anmeldetag: **08.10.87**

(54) **Vorrichtung und Verfahren zum Überwachen des Luftdruckes eines Fahrzeugreifens.**

(30) Priorität: 07.11.86 DE 8629898 U
08.10.86 DE 8626700 U

(43) Veröffentlichungstag der Anmeldung:
**13.04.88 Patentblatt 88/15**

(45) Bekanntmachung des Hinweises auf die
Patenterteilung:
**07.08.91 Patentblatt 91/32**

(84) Benannte Vertragsstaaten:
**AT BE CH DE ES FR GB GR IT LI LU NL SE**

(56) Entgegenhaltungen:
WO-A-81/01688     DE-A- 2 217 011
DE-A- 3 037 722     DE-A- 3 242 291
DE-C- 836 602     FR-A- 909 571
US-A- 3 978 448

(73) Patentinhaber: **Alligator Ventilfabrik GmbH
Alleenstrasse 1
W-7928 Giengen/Brenz(DE)**

(72) Erfinder: **Franke, Horst, Prof.Dipl.-Ing.
Weilerstrasse 23
W-7080 Aalen(DE)**
Erfinder: **Weng, Otto, Dipl.-Ing.**

**W-7094 Unterschneidheim-Woessingen(DE)**

(74) Vertreter: **Hiebsch, Gerhard F., Dipl.-Ing.
Erzbergerstrasse 5A Postfach 464
W-7700 Singen 1(DE)**

## Beschreibung

Die Erfindung betrifft eine Vorrichtung zum Überwachen des Reifendruckes in einem von der Felge eines Fahrzeugrades getragenen Luftreifen mit an der Felge angeordnetem, vom Reifendruck beaufschlagbarem und verformbarem Fühlelement, dem als Meßwertgeber ein Dauermagnet mit einem Faltenbalg zugeordnet und in Abhängigkeit vom Reifendruck etwa achsparallel verschiebbar ist, wobei im Umlaufbereich des Dauermagneten stationär am Fahrzeug ein Meßwertsensor fest-liegt sowie der Dauermagnet bei normalem Reifendruck in einer dem Meßwertsensor nahen Stellung ruht und aus dieser bei sich verminderndem Reifendruck unter Vergrößerung des Abstandes zum Meßwertsensor herausführbar ist.

Bei einer solchen Vorrichtung nach der US-A-3978448 ist der am Faltenbalg verschiebbare Dauermagnet nahe der Radachse vorgesehen, also in radialem Abstand zum Luftreifen festgelegt. Zu dem den Faltenbalg aufnehmenden Gehäuse führt eine andernends an einen Reifenventiladapter angeschlossene Leitung. Es handelt sich um einen sehr aufwendigen und dadurch kostspieligen Aufbau, dessen Teile sichtbar außen angebracht sind, deshalb stören und sogar manipuliert werden können.

Die Verbindung des Drucksystems ist von der Dichtigkeit des Rohres bzw. Schlauches abhängig, zudem können diesem System nur zwei Reifendruckzustände abgelesen werden; eine kontinuierliche Anzeige erfolgt nicht.

Ein stehender Schalter ist elektrisch mit einem Display verbunden, von dem der Fahrer des Fahrzeuges Informationen ablesen kann.

Bei einer Vorrichtung nach der DE-A- 30 37 722 ist das Fühlelement als Druckgeber mit vom Luftdruck beeinflußbarem Saugkreis an jedem Fahrzeugreifen eines Fahrzeuges festgelegt. Dieser Druckgeber wirkt mit einem ortsfesten Aufnehmer zusammen, der an einen freischwingenden Oszillator sowie an eine Auswerteschaltung zur Berechnung und Anzeige des Reifendruckes angeschlossen ist. Eine derartige Anordnung ist mit sehr hohen Fertigungskosten behaftet.

Angesichts dieses Standes der Technik hat sich der Erfinder das Ziel gesetzt, eine einfache Vorrichtung der eingangs erwähnten Art zu schaffen, welche zuverlässig arbeitet und mit einer unkomplizierten Auswerteeinrichtung versehen ist. Wesentliches bei der Erfindung ist auch die Schaffung einer kostengünstigen Vorrichtung sowie die Beseitigung von Unsicherheiten bei der elektronischen Überwachung.

Zur Lösung dieser Aufgabe führt die Lehre nach dem Patentanspurch 1. Als stationärer Aufnehmer kann ein Hall-Sensor dienen. Letzterer ist ein elektronisches Bauelement, welches dank des sog. Halleffektes jeweils senkrecht zu einem fließenden Strom und einem Magnetfeld eine Spannung erzeugt. Der erwähnte Halleffekt geht davon aus, daß in elektrischen Leitern, die sich in einem homogenen Magnetfeld befinden und in denen dazu senkrecht ein elektrischer Strom fließt, senkrecht zum Magnetfeld und senkrecht zum Strom eine Spannungsdifferenz entsteht. Die Größe des Effektes ist vom Leitermaterial abhängig und wird durch die jeweilige Hallkonstante gekennzeichnet.

Hall-Sensoren sind bekanntlich von geringem Gewicht, ihre Größe beträgt nur einige $mm^3$, so daß sie für den vom Erfinder gesehenen Verwendungszweck besonders gut geeignet sind.

Erfindungsgemäß ruht der Dauermagnet bei normalem Reifendruck In einer dem Hall-Sensor nahen Stellung, wobei bei Verminderung des Reifendruckes der Abstand zwischen Hall-Sensor und Dauermagnet größer wird.

Um dies zu erreichen, ragt bei einem Ausführungsbeispiel der Faltenbalg von einem Ansatzgehäuse des Felgenringes in den Reifenluftraum ein und ist über einen axialen Stab oder dergleichen mit einem bistabilen Element verbunden, das einen achsparallel angebrachten Dauermagneten bewegt; letzterer wird also bei Druckabnahme aus der sog. "Gutlage" in eine Alarmstellung reifenwärts umschnappen und dabei in beschriebener Weise den Hall-Sensor beeinflussen.

Bevorzugt wird eine Ausführung, in welcher der Faltenbalg in eine den Felgenring durchsetzende Hülse eingelegt und zum Reifenlauftraum hin offen ist; an seinem anderen --druckdicht verschlossenen -- Ende trägt dieser Faltenbalg den in der Hülse verschieblichen Dauermagneten, der so bei Veränderung des Reifendruckes durch den Faltenbalg unmittelbar bewegt werden kann. Der Faltenbalg bildet selbst einen Energiespeicher, der den Dauermagneten bei normalem Reifendruck in einer vorbestimmten Gleichgewichtslage hält und ihn bei abnehmendem Reifendruck felgenwärts schiebt.

Im Rahmen der Erfindung kann dem Dauermagneten eine den Reifenluftraum in der Hülse begrenzende Dichtung zugeordnet sein, welche der Hülseninnenfläche anliegt.

Nach einem weiteren Merkmal der Erfindung ist zwischen dem Dauermagneten und dem beschriebenen Hall-Sensor eine Stirnwand der Hülse angeordnet, welche mit dieser und dem Dauermagneten einen Hülsenvorraum begrenzt. Dieser Hülsenvorraum weist bevorzugt eine Lüftungsöffnung auf, durch welche Luft bei der Volumensverminderung des Hülsenvorraumes entweichen kann; die Lüftungsöffnung läßt eine ungedämpfte Bewegung des Faltenbalges zu.

Jedoch ist es auch denkbar, den Hülsenvorraum als luftfreie Kammer oder mit einem Luftpolster auszubilden, so daß die Bewegung des Dauermagneten von Hülsenvorraum und Faltenbalg gesteuert wird.

Je nach Lage des Dauermagneten signalisiert der Hall-Sensor beispielsweise ein grünes Dauersignal für einen Reifendruck von z.B. über 2 bar. Für den Bereich von 1,8 bis 2,0 bar wechselt das grüne Signal mit einem roten mehrfach ab, unter 1,8 bar wird ein rotes Dauerlicht als "Alarm"-Stufe ausgelöst. Selbstverständlich sind diese Werte je nach Einsatzgebiet veränderbar - sie sind hier lediglich als bevorzugte Beispiele angeführt.

Der Hall-Sensor ist -- wie bereits erwähnt -- an eine Auswerteschaltung angeschlossen, welche erfindungsgemäß zwei Triggerstufen enthält; diese bestimmen eine untere und eine obere Schwelle der Schaltung. In der ersten Triggerstufe wird geprüft, ob überhaupt eine Raddrehung stattfindet. Bei der zweiten Triggerstufe wird durch ein externes Potentiometer erfindungsgemäß die dem Mindestreifendruck entsprechende Ansprechschwelle eingeregelt. Bei ordnungsgemäßem Reifendruck setzt also der zweite Trigger bei jeder Radumdrehung ein Flipp-Flopp. Es bleibt die grüne Anzeige eingeschaltet; der Reifendruck ist in Ordnung.

Sinkt der Reifendruck in einen ungewünschten Bereich ab, so erreicht das Sensorsignal die Schwelle der zweiten Triggerstufe nicht mehr. Bei der vierten Radumdrehung in diesem Zustand wird über die erste Triggerstufe das Flipp-Flopp zurückgesetzt, die rote Anzeige signalisiert "Alarm".

Um Unsicherheiten im Anzeigenbereich zu vermindern, die beispielsweise durch das Lagerspiel des Fahrzeugreifens entstehen, soll eine statistische Auswertung die Möglichkeit bieten, zwischenzeitig eintreffende Fehlsignale zu unterdrücken. Die Amplitudenspitzenwerte der Sensoramplituden streuen um einen Mittelwert, der dem tatsächlich eingestellten Reifendruck entspricht. Wird die Triggerschwelle auf diesen Wert eingestellt, so liegen 50% der Signale unter dieser Schwelle, 50% darüber. Liegen mehr als 50% der Signale über dem Sollwert, ist der Reifendruck ausreichend, bei weniger als 50% der Signale über dem Sollwert tritt die Alarmstufe ein.

Das vom Hall-Sensor durch den an der luftdicht verschlossenen Seite des Faltenbalges befestigten Dauermagneten erzeugte reifendruckabhängige Signal wird erfindungsgemäß in eine druckproportionale Anzeige umgewandelt. Auch kann das Signal über eine Auswerteschaltung in eine direkte Druckanzeige -- digital oder analog -- umgewandelt werden.

Bei Kurvenfahrten und anderen einseitigen Belastungszuständen des Fahrzeugs können neben den genannten Stör-Einflüssen des Lagerspiels auch starke elastische Verformungen der Felge auftreten, die durch die statistische Auswertung nur teilweise kompensiert zu werden vermögen. Deshalb kann erfindungsgemäß neben dem am Faltenbalg angebrachten Dauermagneten, der aus Gründen der Uebersicht nachfolgend als erster Dauermagnet bezeichnet wird -- und der sich sowohl reifendruck- als auch felgenabhängig relativ zum feststehenden Hallsensor bewegt -- ein zweiter Dauermagnet fest an den Felgen so angebracht werden, daß er etwa denselben Abstand zum Radmittelpunkt hat wie der druckabhängig bewegte erste Dauermagnet. Zweckmäßigerweise wird dieser zweite Dauermagnet am Umfang der Felge in Nähe des ersten Dauermagneten plaziert, mag jedoch auch gegenüber oder an anderer Stelle (jedoch auf gleichem Radius) angebracht werden, da jeder Felgenabschnitt beim Vorbeilaufen am Hall-sensor denselben Verformungszustand aufweist. Beide Dauermagnete erzeugen dann verformungsabhängig gleiche Signale, bei Druckänderungen erzeugt der auf dem Faltenbalg sitzende erste Dauermagnet eine zusätzliche druckabhängige Spannung. Die Auswertung der Spannungssignale zur Kompensation der Unsicherheiten erfolgt elektronisch, zweckmäßigerweise mittels Mikroprozessor.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

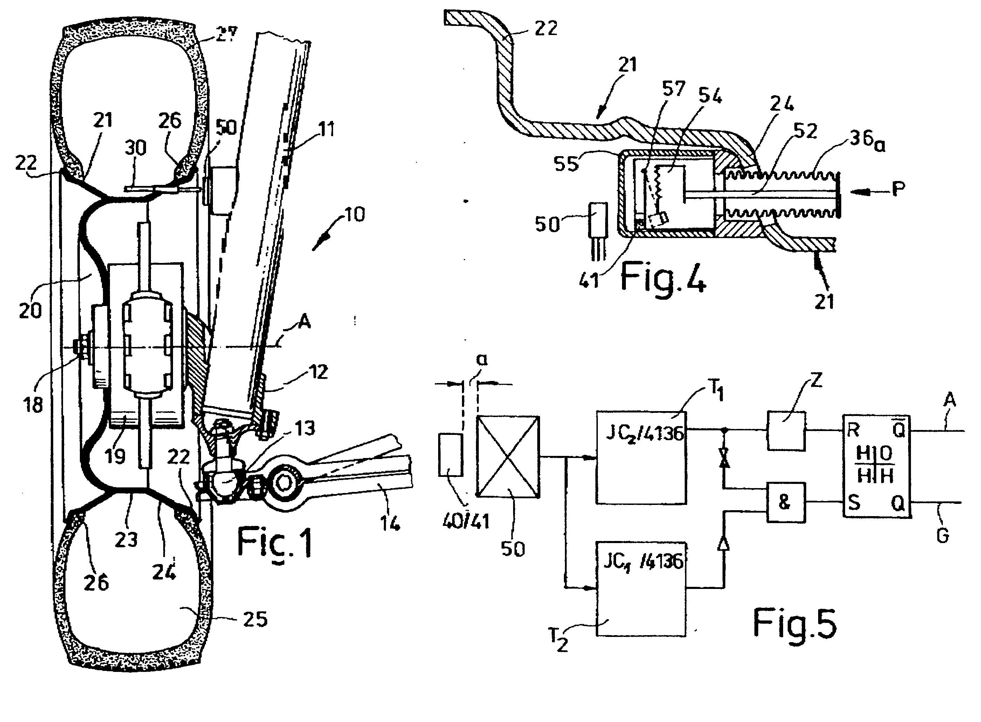

Fig. 1: ein Federbein eines Kraftfahrzeuges mit angeschlossenem Fahrzeugreifen im Längsschnitt;

Fig. 2: ein gegenüber Fig. 1 vergrößertes Detail;

Fig. 3: einen vergrößerten Ausschnitt aus Fig. 2 zu einem weiteren Ausführungsbeispiel;

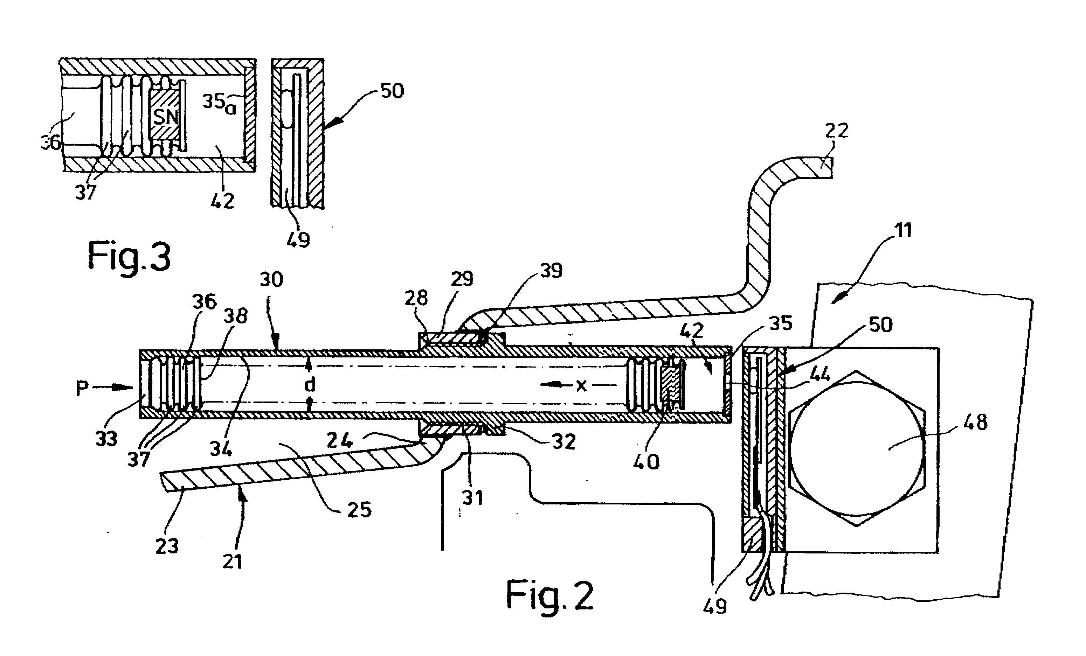

Fig.: 4: den Schnitt durch eine weitere Ausführungsform des Details der Fig. 2;

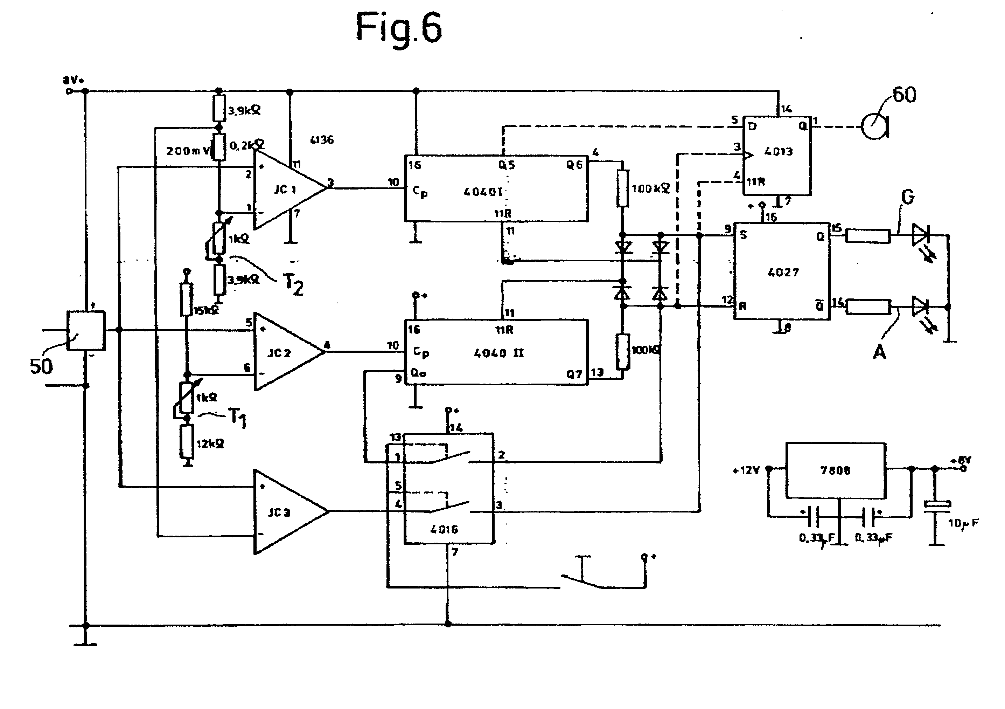

Fig. 5: ein Funktionsdiagramm;

Fig. 6: einen Schaltplan.

Ein Fahrzeugrad 10 ist am unteren Teil eines Federbeines 11 eines nicht weiter dargestellten Kraftfahrzeuges festgelegt. Das Federbein 11 endet an einem Spurstangenhebel 12, unterhalb dessen ein Führungsgelenk 13 für einen Querlenker 14 zu erkennen ist.

Das Fahrzeugrad 10 besteht aus einer -- mit einer Radnabe 19 verschraubten und um einen Achszapfen 18 drehbaren --Radschüssel 20 mit angeschlossenem Felgenring 21, an dessen Felgenhörner 22 sich beidseits eines Felgenbettes 23 Randwulste 26 eines Luftreifens 27 anschmiegen.

Dessen Schichtaufbau ist aus Gründen besserer Uebersichtlichkeit in der Zeichnung vernachlässigt. Im Bereich eines stufenartigen Absatzes 24 des zum Federbein 11 weisenden Felgenhornes 22 wird dieser von einer etwa zur Achslinie A parallelen Hülse 30 durchsetzt. Hierzu ist gemäß Fig. 2 im Felgenring 21 eine Gewindehülse 29 festgelegt, in deren Innengewinde 28 ein Außengewinde 31 der Hülse 30 sitzt. Zwischen der Gewindehülse 29 und einer Ringrippe 32 der Hülse 30 befindet sich ein dichtender O-Ring 39.

In der Hülse 30 verläuft ein Faltenbalg 36 eines beispielsweisen Durchmessers d von 8 mm mit hier neunzig Wellen 37, der sich zum Reifenluftraum 25 hin gegen eine innere Ringschulter 33 der Hülse 30 abstützt, so daß der Balgraum 38 mit jenem Reifenluftraum 25 in Verbindung steht.

Das andere Balgende ist druckdicht verschlossen und trägt einen Dauermagneten 40. Die Hülseninnenfläche 34 der Hülse 30 begrenzt mit deren Stirnwand 35 einen Hülsenvorraum 42.

Vermindert sich der Druck P im Reifenluftraum 25, so wandert der Dauermagnet 40 in Pfeilrichtung x und verursacht eine Reaktion in einem Hall- Sensor 50, dessen Gehäuse 49 am Federbein 11 an einer Schraube 48 verschraubt ist. Da der Hall-Sensor 50 auf jede Bewegung des Dauermagneten 40 anspricht, entsteht so eine kontinuierliche Anzeige für den Reifendruck P.

Die in der Stirnwand 35 der Hülse 30 erkennbare Lüftungsöffnung 44 ist beim Ausführungsbeispiel der Fig. 3 nicht vorhanden, da hier der Hülsenvorraum 42 entlüftet ist. Der verschlossene Hülsenvorraum 42 verhindert im Falle des Undichtwerdens des Faltenbalges 36 einen Abfall des Reifendruckes sowie das Eindringen von Verunreinigungen in die Hülse 30.

Die Ausführungsform der Fig. 4 betrifft eine bistabile Anzeige. Der Faltenbalg $36_a$ -- hier ohne Hülse 30 -- oder eine entsprechend eingesetzte Membrane wird stirnwärts mit dem Reifendruck P beaufschlagt. Eine Längenveränderung des Faltenbalges $36_a$ überträgt ein axialer Stab 52 auf ein bistabiles Hebelsystem 54 in einem Ansatzgehäuse 55 des Felgenringes 21. Ein an einem Drehpunkt 57 angelenkter Schnapphebel mit Dauermagnet 41 wird bei abnehmendem Reifendruck P aus der in Fig. 4 gezeigten "Gutlage" in eine gestrichelt angedeutete "Warnstellung" überführt - hierdurch wird der dem Ansatzgehäuse 55 zugeordnete Hall-Sensor 50 beeinflußt. Die eingehenden Signale des Hall-Sensors 50 variieren im angegebenen Ausführungsbeispiel zwischen 3,5 und 5 V. Die Spitzenwelle der Ampituden entsprechen dem Reifendruck P.

In einer ersten Triggerstufe $T_1$ (Fig. 5) wird geprüft, ob überhaupt eine Radbewegung stattfindet. Bei der zweiten Triggerstufe $T_2$ wird durch ein externes Potentiometer die dem Mindestreifendruck entsprechende Ansprechschwelle eingestellt. Bei ordnungsgemäßem Reifendruck setzt die zweite Triggerstufe $T_2$ bei jeder Radumdrehung erneut ein Flipp-Flopp. Beispielsweise eine grüne Anzeige signalisiert dabei: "Reifendruck in Ordnung".

Sollte der Reifendruck P unzulässig tief absinken, so erreicht das Sensorsignal die Schwelle der zweiten Triggerstufe $T_2$ nicht mehr. Bei der vierten Radumdrehung in diesem Zustand wird über die erste Triggerstufe $T_1$ das Flipp-Flopp zurückgesetzt, eine rote Anzeige signalisiert: "Alarm".

Die Triggerstufe $T_1$ bildet die untere Schwelle, die Triggerstufe $T_2$ die obere Schwelle. Wenn beide Schwellen passiert sind, so bleibt die "Gut"-Anzeige G. Wird im Gegensatz dazu lediglich die unter Schwelle $T_1$ erreicht, so leuchtet "Alarm" A auf.

Die Signale der Hall-Sensoren 50 können durch äußere Einflüsse variieren. Dabei ist es möglich, daß die Amplitudenspitzenwerte um einen Mittelwert streuen, der dem tatsächlich eingestellten Reifendruck P entspricht. Wird die Triggerschwelle auf diesen Mittelwert eingestellt, so liegen z.B. 50% der Signale unter dieser Schwelle und 50% darüber. In der oben erwähnten Schaltung kann die Triggerschwelle um einen Spannungswert entsprechend dem Druckabfall um 0,2 bar nach unten verschoben werden. Damit erreichen im Falle des ordnungsgemäßen Reifendruckes P weit über 50% der Signale die obere Prüfschwelle der Triggerstufe $T_2$. Tritt der Grenzfall auf, d.h. fällt der Reifendruck um 0,2 bar unter des vertretbare Druckminimum ab, so kann dies sehr einfach durch Zählerbausteine erkannt werden.

Dieses Verfahren bietet die Möglichkeit, aus einer großen Rundgesamtheit von auszuwertenden Signalen einen Mittelwert zu bilden und anzuzeigen. Diesem Vorgang dient beispielsweise Baustein Z in Fig. 5, dank dessen ein fünftaktiges Zählen möglich ist. Hierbei sind zur Alarmanzeige zumindest vier zu niedrige Gebersignale erforderlich.

Zur Abrundung wird in Fig. 6 ein Schaltplan zur statistischen Auswertung der Gebersignale vorgestellt als ein mögliches Beispiel für die Auswertungsschaltung. Die Bezeichnung der Bausteine ist in der Zeichnung wiedergegeben. Anstelle dieser elektronischen Schaltung bietet sich auch eine Signalverarbeitung durch Mikroprozessor an.

In der Zeichnung nicht dargestellt ist ein zweiter Dauermagnet an der Felge 21 - 23 so angebracht, daß er etwa einen Abstand zum Radmittelpunkt hat, der jenem des am Faltenbalg 36 druckabhängig bewegten Dauermagneten 40 vom Radmittelpunkt entspricht.

**Patentansprüche**

1.   Vorrichtung zum Überwachen des Reifendruckes (P) in einem von der Felge eines Fahrzeugrades getragenen Luftreifen mit der Felge angeordnetem, vom Reifendruck beaufschlagbarem und verformbarem Fühlelement, dem als Meßwertgeber ein Dauermagnet (40) mit einem Faltenbalg (36, 36$_a$) zugeordnet und in Abhängigkeit vom Reifendruck (P) etwa achsparallel verschiebbar ist, wobei im Umlaufbereich des Dauermagneten (40) stationär am Fahrzeug ein Meßwertsensor (50) festliegt sowie der Dauermagnet (40) bei normalem Reifendruck (P) in einer dem Meßwertsensor (50) nahen Stellung ruht und aus dieser bei sich verminderndem Reifendruck (P) unter Vergrößerung des Abstandes zum Meßwertsensor (50) herausführbar ist,

dadurch gekennzeichnet,

daß das Fühlelement im Felgenring (21) sitzt und der dem Dauermagneten (40) zugeordnete Faltenbalg (36, 36$_a$) in den Reifeninnenraum (25) ragt sowie der Meßwertsensor (50) an eine Auswertschaltung angeschlossen ist.

2. Vorrichtung nach Anspruch 1, dadurch gekennzeichnet, daß der Faltenbalg (36$_a$) von einem Ansatzgehäuse (55) des Felgenringes (2l) in den Reifeninnenraum (25) ragt und über einen axialen Stab (52) od.dgl. mit einer bistabilen Wippe (54) verbunden ist, von der ein achsparallel angebrachter Dauermagnet (41) bewegbar ist.

3. Vorrichtung nach Anspruch 1 oder 2, dadurch gekennzeichnet, daß der Faltenbalg (36) in eine den Felgenring durchsetzende Hülse (30) eingelegt und zum Reifeninnenraum (25) hin offen ist, wobei der andernends druckdicht verschlossene Faltenbalg den in der Hülse verschieblichen Dauermagneten (40) trägt, zwischen dem und einer Stirnwand (35) der Hülse ein Hülsenvorraum (42) vorgesehen ist.

4. Vorrichtung nach Anspruch 3, dadurch gekennzeichnet, daß der Hülsenvorraum (42) mit einer Lüftungsöffnung (44) versehen ist.

5. Vorrichtung nach Anspruch 4, dadurch gekennzeichnet, daß der Hülsenvorraum (42) eine dichte luftfreie Kammer ist oder ein Luftpolster enthält.

6. Vorrichtung nach wenigstens einem der Ansprüche 1 bis 5, dadurch gekennzeichnet, daß auf der Felge (21 bis 23) in einem dem Abstand des Dauermagneten (40) vom Radmittelpunkt etwa entsprechenden Abstand ein weiterer Dauermagnet angebracht ist.

7. Vorrichtung nach Anspruch 6, dadurch gekennzeichnet, daß der weitere Dauermagnet am Felgenumfang nahe des anderen Dauermagneten (40) angeordnet ist.

8. Vorrichtung nach wenigstens einem der Ansprüche 1 bis 7, dadurch gekennzeichnet, daß der Meßwertsensor (50)` insbesondere ein Hall-Sensor, an zwei Triggerstufen (T$_1$ T$_2$) angeschlossen ist, die eine untere und eine obere Schwelle einer Schaltung bestimmen.

9. Vorrichtung nach wenigstens einem der Ansprüche 1 bis 8, dadurch gekennzeichnet, daß ein "Gut"-Signal ausgelöst ist, wenn sowohl die untere als auch die obere Schwelle durchlaufen sind, und/oder, daß ein "Alarm"-Signal ausgelöst ist, wenn das vom Hall-Sensor (50) kommende Signal nur die unter Schwelle erreicht.

10. Verfahren zum Ueberwachen des Luftdruckes eines Fahrzeugreifens mittels einer Vorrichtung nach wenigstens einem der voraufgehenden Ansprüche, dadurch gekennzeichnet, daß mittels zweier etwa im gleichen Abstand zum Radmittelpunkt angeordneter Magneten, deren einer an einem Faltenbalg od.dgl. bewegt wird und deren anderer fest mit der Felge verbunden ist, zwei verformungsabhängige gleiche Signale erzeugt werden, wobei durch den bewegten Magneten eine zusätzliche druckabhängige Spannung erzeugt wird.

11. Verfahren zum Ueberwachen des Luftdruckes eines Fahrzeugreifens mittels einer Vorrichtung nach wenigstens einem der vorangehenden Ansprüche, dadurch gekennzeichnet, daß das vom Hall-Sensor kommende elektrische Signal in eine druckproportionale Anzeige umgewandelt wird.

## Claims

1. Device for monitoring the tyre pressure (P) in a pneumatic tyre carried by the rim of a vehicle wheel with a sensing element which is disposed on the rim and subject to and deformable by the tyre pressure and with which a permanent magnet (40) with a bellows member (36, 36$_a$) is associated as a transducer and slidable approximately parallel to the axis as a function of the tyre pressure (P), wherein a sensor (50) is fixed stationarily on the vehicle in the circumferential region of the permanent magnet (40) and the permanent magnet (40) at normal tyre pressure (P) rests in a position close to the sensor (50) and can be moved out of it with a decrease in tyre pressure (P), increasing the distance from the sensor (50), characterised in that the sensing element is mounted in the rim ring (21) and the bellows member (36, 36$_a$) associated with the permanent magnet (40) extends into the interior (25) of the tyre and the sensor (50) is connected to an analyser circuit.

2. Device according to claim 1, characterised in that the bellows member (36$_a$) extends from a shoulder housing (55) of the rim ring (21) into the interior (25) of the tyre and is connected by an axial rod (52) or the like to a bistable rocker (54) by which a permanent magnet (41) mounted parallel to the axis is movable.

3. Device according to claim 1 or 2, characterised in that the bellows member (36) is inserted in a sleeve (30) passing through the rim ring and opens towards the interior (25) of the tyre, wherein the bellows member, which is sealed pressuretightly at the other end, carries the permanent magnet (40) which is slidable in the sleeve and between which and an end wall (35) of the sleeve is provided a preliminary sleeve chamber (42).

4. Device according to claim 3, characterised in that the preliminary sleeve chamber (42) is provided with a ventilation opening (44).

5. Device according to claim 4, characterised in that the preliminary sleeve chamber (42) is a sealed, airless chamber or contains an air cushion.

6. Device according to one or more of claims 1 to 5, characterised in that on the rim (21 to 23) at a distance approximately corresponding to the distance between the permanent magnet (40) and the wheel centre is mounted a second permanent magnet.

7. Device according to claim 6, characterised in that the second permanent magnet is disposed on the circumference of the rim near the other permanent magnet (40).

8. Device according to one or more of claims 1 to 7, characterised in that the sensor (50), in particular a Hall sensor, is connected to two trigger stages (T$_1$, T$_2$) which determine upper and lower thresholds of a circuit.

9. Device according to one or more of claims 1 to 8, characterised in that a "good" signal is triggered if both the lower and the upper thresholds are passed, and/or that an "alarm" signal is triggered if the signal coming from the Hall sensor (50) reaches only the lower threshold.

10. Method for monitoring the air pressure of a vehicle tyre by means of a device according to one or more of the preceding claims, characterised in that by means of two magnets which are arranged at approximately the same distance from the wheel centre and one of which is moved on a bellows member or the like while the other is rigidly connected to the rim, two deformation-dependent equal signals are generated, wherein an additional pressure-dependent voltage is generated by the moving magnet.

11. Method for monitoring the air pressure of a vehicle tyre by means of a device according to one or more of the preceding claims, characterised in that the electrical signal coming from the Hall sensor is converted to a Pressure-proportional indication.

**Revendications**

1. Dispositif pour surveiller la pression (P) dans un pneumatique porté par la jante d'une roue de véhicule comportant un élément formant sonde monté sur la jante et susceptible d'être sollicité et déformé par la pression du pneumatique, élément auquel est associé en guise de capteur de mesure un aimant permanent (40) combiné avec un soufflet (36, 36a) et mobile en direction sensiblement parallèle à l'axe en fonction de'la pression du pneumatique (P), un détecteur de mesure (50) étant fixé de manière stationnaire sur le véhicule dans la zone de déplacement périphérique de l'aimant permanent (40), ce dernier reposant dans une position proche du détecteur de mesure (50) lorsque la pression (P) du pneumatique est normale, et étant susceptible de s'écarter de cette position dans le sens augmentant sa distance au détecteur de mesure (50) lorsque la pression (P) du pneumatique diminue, caractérisé en ce que l'élément formant sonde est monté dans l'anneau de jante (21), en ce que le soufflet (36, 36a) associé à l'aimant permanent (40) pénètre dans l'espace intérieur (25) du pneumatique, et en ce que le détecteur de mesure (50) est relié à un circuit d'exploitation des données.

2. Dispositif selon la revendication 1, caractérisé en ce que le soufflet (36a) pénètre dans l'espace intérieur (25) du pneumatique à partir d'un carter rapporté (55) de l'anneau de jante (21), et est relié par l'intermédiaire d'une tige axiale (52) ou analogue, à un basculeur bistable (54) qui peut produire le déplacement d'un aimant permanent (41) monté parallèlement à l'axe.

3. Dispositif selon la revendication 1 ou 2, caractérisé en ce que le soufflet (36) est logé dans un fourreau (30) traversant l'anneau de jante et est ouvert en direction de l'espace intérieur (25) du pneumatique, le soufflet, qui à son autre extrémité est fermé de manière étanche à la pression, portant l'aimant permanent (40) qui peut coulisser dans le fourreau, et une chambre de tête de fourreau (42) étant prévue entre l'aimant permanent et une paroi frontale (35) du fourreau.

4. Dispositif selon la revendication 3, caractérisé en ce que la chambre de tête de fourreau (42) est pourvue d'une ouverture de purge d'air (44).

5. Dispositif selon la revendication 4, caractérisé en ce que la chambre de tête de fourreau (42) est une chambre étanche exempte d'air ou bien renferme un matelas d'air.

6. Dispositif selon l'une au moins des revendications 1 à 5, caractérisé en ce qu'un aimant permanent supplémentaire est monté sur la jante (21 à 23) à une distance correspondant sensiblement à la distance de l'aimant permanent (40) au centre de la roue.

7. Dispositif selon la revendication 6, caractérisé en ce que l'aimant permanent supplémentaire est disposé sur la périphérie de la jante, à proximité de l'autre aimant permanent (40).

8. Dispositif selon l'une au moins des revendications 1 à 7, caractérisé en ce que le détecteur de mesure (50), notamment un détecteur à effet Hall, est raccordé à deux étages de déclenchement ($T_1$, $T_2$) qui définissent un seuil supérieur et un seuil inférieur d'un circuit.

9. Dispositif selon l'une au moins des revendications 1 à 8, caractérisé en ce qu'un signal "bon" est délivré lorsqu'aussi bien le seuil inférieur que le seuil supérieur sont dépassés, et/ou en ce qu'un signal "alarme" est délivré lorsque le signal en provenance du détecteur à effet Hall (50) n'atteint que le seuil inférieur.

10. Procédé pour surveiller la pression d'air d'un pneumatique de véhicule, à l'aide d'un dispositif selon l'une au moins des revendications précédentes, caractérisé en ce qu'au moyen de deux aimants disposés sensiblement à la même distance du centre de la roue et dont l'un est déplacé sur un soufflet ou analogue tandis que l'autre est lié de manière fixe à la jante, on produit deux signaux identiques qui sont fonction de la déformation, l'aimant déplacé produisant une tension supplémentaire fonction de la pression.

11. Procédé pour surveiller la pression d'air d'un pneumatique de véhicule, à l'aide d'un dispositif selon l'une au moins des revendications précédentes, caractérisé en ce que le signal électrique en provenance du détecteur à effet Hall est converti en une indication proportionnelle à la pression.

Fig.4

Fig.5

Fig.1

Fig. 3

Fig. 2

EP 0 263 775 B1

# Fig.6

EP 0 263 775 B1